# EUROPEAN PATENT APPLICATION

(11) **EP 1 603 179 A2**
(43) Date of publication of application: **07.12.2005**
(21) Application number: 05253346.0
(22) Date of filing: 31.05.2005
(51) Int. Cl.: H01M 8/02, H01M 8/04, H01M 8/00

(54) **Electrochemical generator in the shape of a conventional battery using fuel cell technology**

(30) Priority: 03.06.2004 ES 200401358
(71) Applicant: CELAYA, EMPARANZA Y GALDOS S.A. (CEGASA), E-01013 Vitoria (Alava) (ES)
(72) Inventor: Alday Lesaga, Javier, 01013 Vitoria-Alava (ES); Uribe-Echeberria, Igor Cantero, 01013 Vitoria-Alava (ES)
(74) Representative: Boden, Keith McMurray

(57) **Abstract**

A consumer battery which uses fuel cell technology and preferably complies with the standards of size and voltage of traditional batteries, wherein the consumer battery comprises two independent parts which are separable from one another, consisting of an electric generator unit (2) and a fuel supply unit (3), with the electric generator unit (2) being configured for use, preferably as a permanent or reusable part, with successive fuel supply units (3), and the fuel supply unit (3) being non-reusable or rechargeable after each use.

## Description

### FIELD OF THE INVENTION

The present invention relates to a consumer battery which uses fuel cell technology.

In the context of the present invention, the term consumer battery is used to describe the kind of battery which is the subject of the present invention, this battery having an appearance similar to that of a traditional battery, also often known as a dry or domestic battery, and being constructed in accordance with the technology of fuel cells, such fuel cells being a type of electric generator developed using new technology, which until now has been destined for supply of energy for stationary systems, although it is also used in the motor vehicle industry as an alternative to the use of petroleum fuels.

An aim of the present invention is the construction of a consumer battery which uses the technology of fuel cells. A fuel cell, like traditional batteries, is a system for transforming chemical energy into electrical energy by means of electro-chemical reactions, with the difference being that, in a fuel cell, the reagents are outside the battery itself. Consequently, the consumer battery of the present invention will have two different parts or units, one which includes the system for the production of electricity from fuel stored externally, and the other which stores the aforementioned fuel.

### STATE OF THE PRIOR ART

The Italian scientist Alexandro Volta produced the first battery in history in the year 1800, but it was not until 1860 that the Frenchman Georges Leclanché developed a system which could be marketed. By means of successive improvements, notable amongst which are the use of the anodic material itself as the container and the gelatinisation of the electrolyte, a battery was developed which had a reduced size, low cost, and was easy to use, the use of which became popular throughout the world. One of the landmarks which permitted its general use was standardisation. Thus, traditional batteries are non-rechargeable, single cell or unit electro-chemical devices which provide 1.5 V in an open circuit. Exceptions exist which provide 4.5 V or 9 V, but in reality these are multiple cell systems, that is, systems which include several batteries packaged in series. These traditional batteries are sold in different formats, the form and dimensions of which vary. The most common are those with cylindrical formats, which include the types known as AAA, AA, C and D. The specifications of all these formats, as well as those of the remaining cylindrical formats, and square or flat formats of traditional batteries, are contained in the standards of the International Electro-technical Commission (IEC) 60086-1 and 60086-2.

The chemical system used in Leclanché batteries consists of zinc used as an anode and manganese dioxide used as a cathode. For almost a hundred years, this system was the one used in traditional batteries, and the only important modification was in the 1960s, with the change of electrolyte to an alkaline system (giving rise to the popular name of "alkaline batteries"), which permitted a substantial improvement in the performance of the batteries.

At present, the market for traditional batteries continues to be dominated by the chemical form ZnMnO₂ (preferably in its alkaline form), but the rapid development of electronics has meant that, on many occasions, the demand for electrical energy in portable equipment cannot be satisfied by the energy supplied by these devices. Unfortunately, the ZnMnO₂ system can be considered as technologically ageing, which makes it unlikely that further radical improvements will be made.

This is stimulating the development of alternative technologies, which, whilst maintaining the same standards of size and voltage, provide certain advantages in comparison with the traditional batteries, for example, nickel-zinc batteries last longer in digital cameras, 1.5 V lithium batteries last longer at a lower price, and rapid-recharging NiMH batteries can be reused, but their performance levels are lower than those of the primary alkaline batteries.

The present invention proposes an alternative technology based on that of fuel cell technology, which, at a competitive cost, can provide better performance than traditional batteries.

Fuel cells are systems to transform chemical energy into electrical energy by means of electro-chemical reactions. Unllke traditional batteries, in fuel cells, the reagents are outside the battery itself. The fuels are most commonly gases, preferably hydrogen and oxygen, although liquids can also be used, such as methanol, and solids, such as zinc. It is common practice to use air as the source of oxygen, in order to avoid storage of one of the fuels, and by this means thus increase the energy density of the system.

In an element of a typical fuel cell, hydrogen is channelled and distributed by means of a diffusion plate, which usually acts simultaneously as a negative electronic collector. The hydrogen is diffused over the entire surface of the anode, which acts as a support for the catalyst and as a barrier to prevent the electrolyte from escaping from the fuel cell. When the hydrogen comes into contact with the catalyst, the electro-chemical reaction of oxidation occurs, in which protons and electrons are generated. The former pass through the electrolyte, whereas the latter circulate through the external circuit and generate an electric current. At the other electrode, a diffusion plate, similar to that previously described, distributes oxygen over the entire surface of the cathode, which, as in the case of the anode, supports the catalyst. The electro-chemical reaction which occurs is the joining of an oxygen atom with two protons, which are obtained via the electrolyte, and two electrons which gain access via the external circuit, the resulting product being a water molecule. Consequently, from hydrogen and oxygen, electricity is obtained as a product, with water as a residual byproduct.

The potential or voltage of the complete reaction as described hereinabove is 1.23 V in theory, although, in practice, the existence of internal resistances, amongst other factors, limit this value to a range of between 0.9 V and 0.5 V, in the same way that the voltage in practice of a traditional battery oscillates between 1.4 V and 0.9 V. Consequently, in order to obtain useful voltages in a fuel cell, it is necessary to place at least two unit elements or cells in series.

There exist five types of fuel cells, defined by the type of electrolyte used (MCFC → molten carbonates, PAFC → phosphoric acid, SOFC → solid oxides, AFC → alkaline, and PEMFC → protonic membrane). In the present invention, use is proposed preferably of the last-mentioned kind of fuel cell, because of its temperature of use (ambient) and ease of operation (solid membrane, as compared to a liquid), especially when cells are placed in series.

The standard format of PEMFC fuel cells is that of flat cells which are stacked and coupled in series, forming what is known as a stack, in order to obtain a high voltage. In this stack, between one cell and the next, there is a conductive plate, known as a bipofar plate, with channels at both sides in order to distribute the gases (hydrogen on one side and oxygen on the other), whereas the plate itself transmits the electricity.

As disclosed, for example, in US-A-5925477 and US-A-6127058, alternative designs exist in which the cells are placed adjacent to one another in the same plan, such that, although the coupling between the cells is more complex, separation of the fuel gases is obtained, which facilitates the design in small-sized systems.

The tubular design of cells of polymer membrane-type fuel cells has also been explored, such as, for example, in US-A-5509942, US-A-6001500, US-A-6007932, US-A-6080501 and US-A-2003/00021890, although in all these cases focus has been exclusively on the production method, and not on the use.

WO-A-90/14694 discloses the use of an alkaline fuel cell with an AA format. As fuel, it uses methanol or ethylene glycol, which means that the voltage of the system does not exceed 1 V, which is lower than that necessary for traditional batteries. In addition, methanol has very slow kinetics, such that the intensities which can be extracted from a battery of the aforementioned size are excessively low. There is, however, no disclosure of the separation of the fuel from the remainder of the battery, such that replacement of the complete battery is completely unviable from the economic point of view.

### EXPLANATION OF THE INVENTION AND ADVANTAGES

An aim of the present invention is the construction of a consumer battery with fuel cell technology, whilst taking into account the concepts assigned to each of those kinds of technologies as set out hereinabove.

Since one of the critical parameters of consumer batteries is the price, and since fuel cells incorporate various high-cost components in their internal configuration, notably the catalyst and the membrane, in the present invention, the construction is proposed of a device which is formed by two different parts, one of which is permanent and the other of which is replaceable.

By this means, the consumer battery now proposed is characterized in complying with the standards of size and voltage of traditional batteries, and comprising two independent parts which are separable from one another, consisting of an electric generator unit and a fuel supply unit which supplies fuel, coupling means for coupling the electric generator unit and the fuel supply unit, and opening means for opening the fuel supply unit. The electric generator unit is permanent and reusable with successive fuel supply units, and the fuel supply unit is non-reusable or rechargeable after each use. The opening means act when the electric generator unit and the fuel supply unit are coupled to one another.

This consumer battery is based on the use of a passive fuel cell, and generates electricity from hydrogen and oxygen, in particular using as anodic fuel, hydrogen, which is stored in the fuel supply unit, by any physical or chemical means which can retain a gas, such as pressure means, or in metal hydrides or carbon nanofibres, or hydrogen produced from a fuel which reacts chemically in order to give rise to the formation of hydrogen, such as methanol or NaBH₄, and using as a cathodic fuel, oxygen as obtained from the air.

In one embodiment the electric generator unit incorporates the negative contact of the consumer battery, and has a metal carcass with a plurality of perforations which are exposed to the atmosphere.

In one embodiment the fuel supply unit incorporates the positive contact of the consumer battery, and has a hermetic seal which must be broken by the opening means when the consumer battery is put into service, which hermetic seal is a seal made of non-conductive material.

In a preferred embodiment the coupling means comprises screw means for screwing the electric generator unit and the fuel supply unit to one another in a hermetic manner.

Preferably, the opening means comprises hollow, cutter prongs which can pass through the hermetic seal and provide for access by the fuel from the fuel supply unit to the electric generator unit.

The electric generator unit, that is, the permanent part, is formed by a fuel cell, which preferably has a polymer membrane and incorporates the gas diffusers, the electrodes, the catalyst, the membrane, and any other part of the fuel cell which is necessary in order to generate electricity from the fuel. Since the voltage produced in a fuel cell is approximately half that of a traditional battery, it is necessary to replicate the aforementioned components to provide at least two cells which are coupled in series and provide the necessary voltage. The preferred method of obtaining the necessary electrode surface is by means of a tubular configuration of the cells, although an arrangement of circular flat cells can also be used.

In the present invention the electric generator unit contains all of the components of the consumer battery which have a high cost, either because of their intrinsic high price or because of the difficulty in manufacturing the same.

The present invention uses preferably, but not exclusively, oxygen from the air as the cathodic fuel, such that the arrangement of the elements in the consumer battery must be such as to permit ingress of air to the positive electrode. Use of air as the fuel facilitates the design of the fuel supply unit, since this is limited to a single fuel, which is preferably hydrogen.

The fuel supply unit must also be sealed hermetically in order to guarantee its preservation and storage for long periods of time. The fuel, which is the anodic fuel, since, as has already been described, the cathodic fuel is preferably oxygen as obtained from the air, is preferably hydrogen, since the chemical energy which it stores is sufficient to provide an electric generator system which can compete with traditional batteries. The residues which are generated are absolutely harmless for the environment, an aspect which is extremely important for this kind of product.

The anodic fuel can be in gaseous, liquid or solid form, and can be hydrogen or any product which, by means of a simple operation, gives rise to the formation of hydrogen.

As the fuel supply unit will be discarded when the fuel is used up, its cost must be low, with respect both to the raw materials and the production process, at least when the economy of scale is applied.

The system of connection between the permanent part of the fuel cell and the part which stores the fuel must be designed such that it guarantees hermetic sealing, in order to prevent leakage of fuel in the area of contact, and the coupling operation must also be simple, since the present device will be used by non-specialists.

In addition, the opening system of the fuel storage part may be operative only when the two units are coupled, or may function simultaneously with the coupling operation, in order to prevent leakage of fuel in either event. This opening system can be destroyed, since it will only be used once.

The present invention relates to the use of fuel cell technology in a consumer battery, and the consumer battery can have any format, such as those associated with traditional batteries. Consequently, although the preference is for a 1.5 V cylindrical system, this does not exclude other formats, such as, for example, the LP1 (primary 1.5 V battery with prismatic form) or the 6F22 (primary 9 V battery with prismatic form) battery formats.

### BRIEF DESCRIPTION OF THE DRAWINGS

The present invention is described in greater detail in the example provided hereinafter. This example is provided for the purpose of illustrating and facilitating understanding of the present Invention, and is not to be interpreted as restricting the scope of the present invention.

Figure 1 is an elevational view of a consumer battery 1 according to the present invention in its form in use, in which the electric generator unit 2 and the fuel supply unit 3 are coupled to one another.

Figure 2 is an elevational view of the consumer battery 1 of Figure 1, but with the electric generator unit 2 and fuel supply unit 3 separated.

Figure 3 is a schematic representation of the consumer battery 1 of Figure 1, in longitudinal cross-section.

Figure 4 is an enlarged view of the detail IV, which is circled in Figure 3.

Figure 5 is a view similar to Figure 4, but illustrates the electric generator unit 2 and fuel supply unit 3 separated from one another, as in Figure 2.

### DESCRIPTION OF A PREFERRED EMBODIMENT

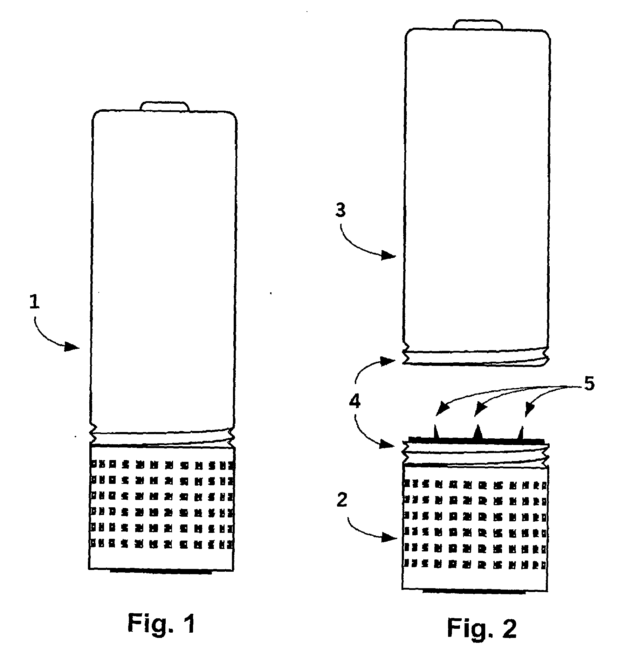

Figures 1 to 5 illustrate a preferred embodiment of the present invention, which relates to a consumer battery 1 made using fuel cell technology.

The consumer battery 1 complies with the standards of size and voltage of traditional batteries, which are often known as dry or domestic batteries, and comprises two independent parts which are separable from one another, consisting of an electric generator unit 2 and a fuel supply unit 3, coupling means 4 for coupling the electric generator unit 2 and the fuel supply unit 3, and opening means 5 for opening the fuel supply unit 3 when fitted to the electric generator unit 2.

The electric generator unit 2 is permanent or re-usable with successive fuel supply units 3, and the fuel supply unit 3 is non-reusable or re-chargeable after every use, with the opening means 5 acting when the electric generator unit 2 and the fuel supply unit 3 are coupled to one another.

The consumer battery 1 is configured as a passive fuel cell, and generates electricity from hydrogen and oxygen; in particular using as the anodic fuel, hydrogen which is stored in the fuel supply unit 3, by any physical or chemical means which can be used to retain a gas, such as by means of pressure, or in metal hydrides or carbon nanofibres, or hydrogen which is produced by a fuel substance which reacts chemically to form hydrogen, such as methanol or NaBH₄, and as the cathodic fuel, oxygen which is obtained from the air.

In this embodiment the electric generator unit 2 incorporates a negative contact or collector 18 of the consumer battery 1, and has a metal casing 16 which is in contact with the atmosphere and includes a plurality of perforations 17, typically as formed by needles.

In this embodiment the fuel supply unit 3 incorporates a positive contact 26, and has a hermetic seal 6 which is broken by the opening means 5 when the consumer battery 1 is put into service. In this embodiment the seal 6 is formed of a non-conductive material.

In a preferred embodiment the coupling means 4 comprises screw means for screwing together hermetically the electric generator unit 2 and the fuel supply unit 3, and the opening means 5 comprises hollow prongs which are configured to puncture the seal 6 and provide for delivery of fuel 23 from the fuel supply unit 3 to the electric generator unit 2.

Figures 1 and 2 illustrate the preferred consumer battery 1 in its coupled and uncoupled states, respectively. The lower part is the electric generator unit 2 which includes holes 17 in its casing 16, and is a permanent part of the consumer battery 1, whereas the upper part is the fuel supply unit 3, which includes a non-perforated casing 22, and is a non-reusable part in which the fuel 23 is stored.

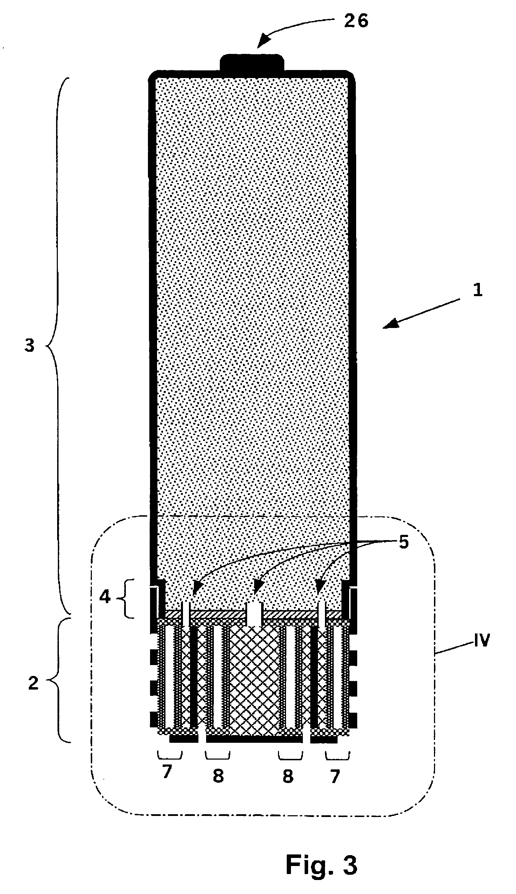

Figure 3 illustrates a transverse cross-section of the complete consumer battery 1, in which the different components can be seen, that is, the lower, permanent part 2, the upper part 3 in which the fuel 23 is stored, the coupling means 4 for coupling the lower and upper parts 2, 3, and the opening means 5 for opening up the upper, non-reusable part 3 when coupled to the lower, permanent part 2.

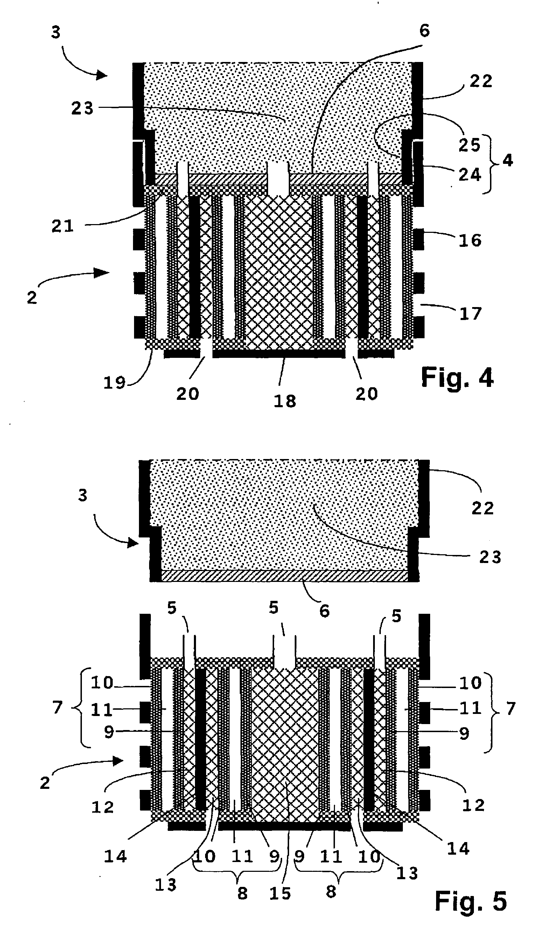

Figures 4 and 5 illustrate the above cross-section in greater detail, before and after coupling. Figure 4 illustrates the consumer battery 1 with its two parts 2, 3 coupled, and it can be seen that the opening means 5 has perforated the seal 6, thus permitting the delivery of fuel 23 to the permanent part 2. Figure 5 illustrates the two parts 2, 3 where separated and prior to coupling, and illustrating clearly the seal 6 of the non-reusable part 3.

In the centre of the system there is a second anodic diffuser 15 which acts to supply hydrogen to the negative or anodic electrode 9 of the inner cell 8.

All of the components of the permanent part 2 are introduced into the metal casing 16, which acts both as a container for the components of the electric generator unit 2 and as a positive collector. The casing 16 contains a plurality of perforations, in this embodiment consisting of holes 17, in order to permit passage of air to the cathodic electrode 10 of the outer cell 7.

At its lower end, the permanent part 2 has a negative contact or collector 18 in order to facilitate the connection of the consumer battery 1 to the equipment it operates, or to other consumer batteries 1 placed in series. The negative collector 18 is connected electrically to the internal hydrogen diffuser 15, and is isolated from the other components by a first non-conductive material 19. Both the first non-conductive material 19 and the negative collector 18 must permit the passage of air to the internal air diffuser 13, and in this embodiment include perforations 20 for this purpose.

At its upper end, the permanent part 2 has a seal 21 which consists of a second non-conductive material, which prevents the escape of the gases and electrical contact between the different components.

The non-reusable part 3 has a far simpler configuration than the permanent part 2. Basically, it is a metal cylinder 22, in the interior of which the fuel 23 is stored, for example, hydrogen as adsorbed in carbon nanofibres, as disclosed in US-A-5653951. At its lower end, the cylinder 22 is sealed by the non-conductive, hermetic seal 6, which can easily be perforated by the opening means 5.

The coupling means 4 for coupling the permanent and non-reusable parts 2, 3 consists of two coupling pieces, one of which is incorporated in the permanent part 2, and the other of which is incorporated in the non-reusable part 3. In this embodiment the coupling piece 24 which is incorporated in the permanent part 2 is the female component of the From amongst the different formats which correspond to traditional batteries, the most common is embodied, that is, the AA or LR6 format. The dimensions of a traditional battery with this format are a height of 5 cm and a diameter of 1.4 cm. In this embodiment, where the voltage of the consumer battery 1 must be 1.5 V, the consumer battery 1 incorporates two unit elements or cells in series.

Comparison of the performance of an alkaline battery of the traditional kind and a consumer battery 1 with fuel cell technology according to the present invention, where provided with a polymer membrane and supplied with hydrogen and air in passive form, that is, without pressurizing or humidifying the gases or applying any heat, indicates that it is necessary to use two cells 7, 8, each consisting of an anodic electrode 9, a cathodic electrode 10 and an electrolytic membrane 11, with a surface area of 4 cm² each, in order for both systems to provide similar energy levels.

The preferred arrangement for placing two cells 7, 8 of this size Inside a cylindrical structure of the aforementioned size, such that an electrode of each cell 7, 8 is exposed to the atmosphere, is by forming two concentric cylinders in the one of the ends of the consumer battery 1 which forms the aforementioned permanent part 2, as illustrated in Figure 3.

Figures 4 and 5 illustrate enlarged views of the permanent part 2 in Figure 3. As can be seen, the permanent part 2 includes an anodic gas diffuser 12 between the outer cell 7 and the inner cell 8, the function of which is to distribute the hydrogen, and a cathodic gas diffuser 13, which is responsible for diffusion of the oxygen from the air to the positive or cathodic electrode 10. Both of the diffusers 12, 13 must be electrical conductors, since, as well as distributing the gases, they must transfer an electron flow from the electrodes 9, 10 to an intermediate collector 14. The intermediate collector 14 is a metal tube which prevents the gases from being mixed, and at the same time permits electrical contact between the two cells 7, 8. coupling means 4, and the coupling piece 25 which is Incorporated in the non-reusable part 3 is the male component of the coupling means 4. However, in general, the configuration and arrangement of the coupling means 4 will depend on the system used.

The coupling pieces 24, 25 of the coupling means 4 should preferably be metal, since, as well as keeping the permanent and non-reusable parts 2, 3 joined during use of the consumer battery 1, they must also connect the positive collector 16 of the permanent part 2 to the upper end or positive contact 26 of the consumer battery 1, via the outer metal casing 22 of the non-reusable part 3.

Another important characteristic of the coupling means 4 is to achieve a hermetic seal, since once the opening means 5 of the reusable part 2 opens the hermetic seal 6 of the disposable part 3, this is a possible point of escape of the fuel 23. The simplest coupling means 4 is that of a metal screw, although many other possible designs could be employed.

The opening means 5 perforates the hermetic seal 6 of the non-reusable part 3 when the two parts 2, 3 of the consumer battery 1 are coupled. At this moment, the hydrogen fuel 23 begins to transfer from its place of storage in the non-reusable part 3, and is introduced into the anodic diffusers 12, 15 of the permanent part 2, and reaches the anodic electrodes 9. In the present embodiment the opening means 5 are formed by hollow, cutting prongs, and actuation is associated with the coupling means 4, since, in the final stage, the hollow, cutting prongs pierce the hermetic seal 6 of the non-reusable part 3. However, actuation of the opening means 5 need not be associated with the coupling action, and can be carried out in two different stages.

Finally, It will be understood that the present invention has been described in its preferred embodiments and can be modified in many different ways without departing from the scope of the invention as defined by the appended claims.

## Claims

1. A consumer battery which uses fuel cell technology and preferably complies with the standards of size and voltage of traditional batteries, wherein the consumer battery comprises two independent parts which are separable from one another, consisting of an electric generator unit (2) and a fuel supply unit (3), with the electric generator unit (2) being configured for use, preferably as a permanent or reusable part, with successive fuel supply units (3), and the fuel supply unit (3) being non-reusable or rechargeable after each use.

2. The consumer battery of claim 1, further comprising coupling means (4) for coupling the electric generator unit (2) and the fuel supply unit (3), and opening means (5) for opening the fuel supply unit (3) to the electric generator unit (2), such as to actuate the same, when the electric generator unit (2) and the fuel supply unit (3) are coupled to one another.

3. The consumer battery of claim 2, wherein the coupling means (4) comprises screw means for screwing together the electric generator unit (2) and the fuel supply unit (3) in a hermetic manner.

4. The consumer battery of claim 2 or 3, wherein the fuel supply unit (3) incorporates a positive contact (16), and has a hermetic seal (6) which is broken by the opening means (5) when the consumer battery is put into service.

5. The consumer battery of claim 4, wherein the seal (6) is formed of a non-conductive material.

6. The consumer battery of claim 4 or 5, wherein the opening means (5) comprises hollow, cutting prongs which are configured to puncture the seal (6) and provide for delivery of fuel from the fuel supply unit (3) to the electric generator unit (2).

7. The consumer battery of any of claims 1 to 6, where using a passive fuel cell.

8. The consumer battery of any of claims 1 to 7, where operative to generate electricity from hydrogen and oxygen.

9. The consumer battery of claim 8, where the anodic fuel is hydrogen which is stored in the fuel supply unit (3), using any physical or chemical means which can retain a gas, preferably as pressure means, or in metal hydrides or carbon nanofibres.

10. The consumer battery of claim 8, where the anodic fuel is hydrogen which is produced from a chemical reaction of a fuel substance, preferably methanol or NaBH₄.

11. The consumer battery of any of claims 8 to 10, wherein the cathodic fuel is oxygen, preferably as obtained from the atmosphere.

12. The consumer battery of any of claims 1 to 11, wherein the electric generator unit (2) incorporates a negative contact or collector (18) of the consumer battery, and has a metal casing (16) which is exposed to the atmosphere and includes a plurality of perforations in the form of holes (17).
